# EUROPÄISCHE PATENTSCHRIFT

(11) **EP 0 516 208 B1**
(45) Veröffentlichungstag und Bekanntmachung des Hinweises auf die Patenterteilung: **07.08.1996**
(21) Anmeldenummer: 92201309.9
(22) Anmeldetag: 08.05.1992
(51) Int. Cl.: B29C 45/14, G11B 33/02

(54) **Technisches Gerät, insbesondere Uhrwerk oder Laufwerk zum Bewegen von Informationsträgern**
Technical apparatus, particularly clock mechanism or drive for information carrier
Appareil technique, notamment mouvement d'horlogerie ou dispositif d'entraînement de support d'information

(30) Priorität: 17.05.1991 DE 4116143
(43) Veröffentlichungstag der Anmeldung: 02.12.1992
(73) Patentinhaber: Philips Patentverwaltung GmbH, 22335 Hamburg (DE); Philips Electronics N.V., 5621 BA Eindhoven (NL)
(72) Erfinder: Gumbert, Hans, c/o Philips Patentverwaltung GmbH, W-2000 Hamburg 1 (DE); Kunze, Norbert, c/o Philips Patentverwaltung GmbH, W-2000 Hamburg 1 (DE); Weber, Georg, c/o Philips Patentverwaltung GmbH, W-2000 Hamburg 1 (DE)
(74) Vertreter: von Laue, Hanns-Ulrich, Dipl.-Ing.

(56) Entgegenhaltungen:
- EP-A- 0 392 600
- DE-A- 3 045 638
- PATENT ABSTRACTS OF JAPAN vol. 12, no. 364 (M-747)(3211) 29. September 1988 & JP-A-63 120 617 (MATSUSHITA ELECTRIC IND CO)
- PATENT ABSTRACTS OF JAPAN vol. 12, no. 282 (M-726)(3129) 3. August 1988 & JP-A-63 059 521 (MATSUSHITA ELECTRIC IND CO)
- PATENT ABSTRACTS OF JAPAN vol. 12, no. 267 (M-722)(3114) 26. Juli 1988 & JP-A-63 049 414 (MATSUSHITA ELECTRIC IND CO)
- PATENT ABSTRACTS OF JAPAN vol. 4, no. 105 (M-23)(587) 26. Juli 1980 & JP-A-55 063 231 (PIONEER)
- PATENT ABSTRACTS OF JAPAN vol. 8, no. 73 (M-287)(1510) 5. April 1984 & JP-A-58 219 031 (SONY)

## Beschreibung

Die Erfindung bezieht sich auf ein technisches Gerät, insbesondere elektromechanisches Laufwerk zum Bewegen von Informationsträgern, wie Magnetbändern oder Platten, mit einer tragenden Platte aus Metall, an der in Kunststoff-Spritztechnik bewegliche Kunststoff-Funktionsteile gebildet sind, von denen sich jedes im Bereich wenigstens eines Plattendurchbruches festhält mittels Kunststoff-Haltestücken auf beiden Plattenoberflächen, die durch den Durchbruch hindurch mittels eines einstückig mit ihnen gebildeten Kunststoffsteges verbunden sind, wobei die die Durchbruchränder überdeckenden Teile der Kunststoff-Haltestücke die überdeckten Plattenteile mit einem nachträglich durch mechanisches Verformen der Funktionsteile erhaltenes Spiel einschließen, das der Beweglichkeit eines Gleitlagers entspricht.

Ein derartiges technisches Gerät ist beispielsweise aus der EP 0 392 600 A2 bekannt. In Kunststoff-Spritztechnik (Outsert-Moulding-Technik) werden dabei an metallischen Platten Funktionsteile gebildet, von denen sich jedes im Bereich wenigstens eines Plattendurchbruches festhält mittels Kunststoff-Haltestücken auf beiden Plattenoberflächen, die durch den Durchbruch hindurch mittels eines einstückig mit ihnen gebildeten Kunststoffsteges verbunden sind. Sind die Stege rund, dann besteht bei einer einstegigen Befestigung die Möglichkeit, die Funktionsteile nach dem Spritzen zu drehen. Diese Drehbarkeit ist aber schwergängig und nur wenige Male durchführbar. In der EP 0 392 600 A2 ist beschrieben, wie man derartige Befestigungen derart beweglich machen kann, daß sich Gleitlagereigenschaften ergeben. Dies wird dadurch erreicht, daß die die Durchbruchsränder überdeckenden Teile der Kunststoffhaltestücke die überdeckten Plattenteile mit einem durch nachträgliches mechanisches Verformen der Teile erhaltenen Spiel einschließen, das der Beweglichkeit eines Gleitlagers entspricht. Dieses Spiel wird durch einen nachträgliche Verformung herbeigeführt.

Aus der JP 62-162272 ist es bekannt, zwei getrennt gespritzte Funktionsteile so zu gestalten, daß sie nach dem Spritzgießen durch ein Verstellen miteinander in Eingriff bringbar sind. Die durch das In-Eingriff-Bringen erreichte Funktion ist jedoch nur statisch.

In der JP-A-63-120617 wird das Anspritzen von zwei ineinandergreifenden Zahnrädern an eine Trägerplatte beschrieben. Es sind jedoch zwei Spritzvorgänge erforderlich. Zunächst wird ein vollständiges und ein unvollständiges Zahnrad in einem Spritzvorgang gespritzt. Nach einem Abkühlvorgang wird das unvollständige Zahnrad gedreht und in einem erneuten Spritzvorgang zu einem vollständigen Zahnrad umgespritzt.

Aus der JP-A-55-63231 ist es bekannt, ein vollständiges und ein unvollständiges Zahnrad in einem Spritzvorgang an eine Lagerplatte anzuspritzen und nach dem Spritzen durch Drehen in Eingriff zu bringen. Dieses Verfahren ist jedoch auf diesen speziellen Anwendungsfall beschränkt und erlaubt z.B. nicht, vollständig umlaufende Getriebe zu realisieren.

In der DE-A-30 45 638 ist ein Verfahren beschrieben, bei dem miteinander kämmende Zahnräder in Eingriff miteinander stehend gespritzt werden. Jedes Zahnrad ist jedoch an zwei Trägerplatten angelagert und somit von zwei Trägerplatten abhängig.

In der JP-A-58-219031 schließlich wird ein Lager eines Zahnrades mittels zweier aufeinanderfolgender Spritzvorgänge an einer Lagerplatte gebildet. Zunächst wird eine Hülse in einen Durchbruch der Trägerplatte gespritzt und danach das Zahnrad in diese Hülse eingespritzt, wobei die Schmelztemperatur des Kunststoffes der Hülse höher als die des Kunststoffes des Zahnrades ist. Durch einen Unterschnitt lassen sich die Adhäsionskräfte zwischen Hülse und Zahnrad infolge der beim Abkühlen des Kunststoffes auftretenden Schwindung verringern.

Es ist Aufgabe der Erfindung, das technische Gerät der eingangs erwähnten Art mit drehbeweglich und verschiebebeweglich gemachten, angespritzten Funktionsteilen zu verbessern durch weitere Montageerleichterungen und durch eine Ausbildung der Funktionsteile, welche die Realisierung verschiedenartigster Getriebe, wie z.B. Zahnstangengetriebe, Hebelgetriebe und vollständig umlaufende Zahnradgetriebe, ermöglicht.

Die gestellte Aufgabe ist nach der Erfindung durch ein technisches berät gemäß Anspruch 1, durch ein technisches berät gemäß Anspruch 2 und durch ein technisches berätz gemäß Anspruch 3 gelöst. Zweckmäßige Weiterbildungen der Erfindung sind in den abhängigen Ansprüchen beschrieben.

Bei der ersten Ausführungsform der Erfindung nach Anspruch 1 ist dabei ein Funktionsteil ein als Zahnstange ausgebildeter Schieber und das andere Funktionsteil ein Zahnrad, die ein Zahnstangengetriebe bilden, indem der seitlich neben dem Zahnrad gebildete Schieber in den Wirkbereich des Zahnrades geschoben wird.

Der Durchbruch für das als Zahnstange ausgebildete Funktionsteil braucht dabei nur so lang zu sein, daß sich Zahnrad und Zahnstange beim Spritzvorgang nicht berühren. Werden später nach dem mechanischen Verformen zur Erzielung der Beweglichkeit Zahnstange und Zaahnrad gegeneinander mechanisch verschoben, dann bilden Zahnrad und Zahnstange ein Getriebe, das innerhalb des Gerätes wie ein Hand montierte Zahnstangengetriebe einsetzbar ist.

Bei der zweiten Ausführungsform der Erfindung nach Anspruch 2 ist vorgesehen, daß ein Schieber und ein als Hebel mit einem Hebelarm ausgebildetes Funktionsteil zu einem Hebelgetriebe verknüpft werden, indem ein Mitnahmestift des Hebelarmes in eine Mitnahmeöffnung des Schiebers nachträglich eingeklinkt wird. Da beide Funktionsteile in Kunststofftechnik gespritzt sind, kann der Hebelarm elastisch verbiegbar sein. Damit wird es möglich, den Mitnahmestift nach dem mechanischen Verformen zum Erzielen der Drehbeweglichkeit in den Schieber einzuklinken und damit ein Hebelgetriebe zu schaffen.

Bei der dritten Ausführungsform der Erfindung nach Anspruch 3 ist vorgesehen, daß wenigstens zwei Funktionsteile wenigstens teilweise zur Übertragung von Bewegungen durch die tragende Platte ausgelegt sind und daß die Funktionsteile von wenigstens zwei in Schichtbauweise auf Abstand übereinander angeordneten, Funktionsteile tragenden Platten zwischen den tragenden Platten mit den Funktionsteilen der jeweils anderen Platte in kraftübertragender Beziehung sind. Die einzelnen tragenden Platten werden hierbei selbständig gespritzt und nachher aufeinander gesetzt, wobei sich in der Schichtbauweise dann ein Getriebe ergibt. Durch mehrere Schichten wird es möglich, auf engstem Raum kleine komplizierte Getriebe zu bilden, bei denen keine einzelnen Zahnräder montiert werden, sondern nur in Kunststoff-Spritztechnik gebildete Platten aufeinander geschichtet werden.

Nach einer weiteren Ausgestaltung der dritten Ausführungsform der Erfindung ist vorgesehen, daß zur Abstandsgebung zwischen den tragenden Platten Abstandsglieder vorgesehen sind, wobei die Abstandsglieder jeweils an eine tragende Platte im festen Sitz angespritzt sind und Befestigungsmittel tragen, die in die andere Platte einschnappbar ausgebildet sind, wobei die Befestigungsmittel in eine Hülse der anderen tragenden Platte einschnappbar ist, wobei die Hülse im festen Sitz an die andere tragende Platte angespritzt ist. Nach einer weiteren Ausgestaltung der dritten Ausführungsform der Erfindung ist vorgesehen, daß wenigstens die Funktionsteile zwischen den tragenden Platten als Zahnräder ausgebildet sind, die ein Getriebe bilden und von außen übertragene Antriebsdrehbewegungen umformen und als Ahtriebsdrehbewegungen wieder nach außen abgeben. Die Abstandsglieder sind dabei selbst Bestandteile der tragenden Platten und verrasten beim Aufeinanderstecken der Platten miteinander unter Vorgabe der vorgesehenen Plattenabstände.

Nach einer weiteren Ausgestaltung der Erfindung ist vorgesehen, daß in einem der überdeckenden Teile beim Spritzvorgang ein Loch gebildet wird, das mit einem Loch in der tragenden Platte fluchtet, und daß bei mehreren in Getriebeeingriff zu bringenden Funktionsteilen die fluchtenden Löcher in den überdeckenden Teil und in der tragenden Platte so vorgesehen sind, daß die Zahnungen beim Zusammenfügen der tragenden Platten bei fluchtenden Löchern sauber ineinander greifen. Sind während der Montage in die fluchtenden Löcher Zentrierstifte eingesetzt, dann stehen alle Zahnräder im Augenblick der Montage in der korrekt richtigen Stellung, so daß die Platten beinahe blind aufeinander aufgesetzt werden können. Hiermit wird eine automatische Montage der Platten übereinander ohne weiteres möglich. Bei vielen Lagern wird zur Erleichterung der Beweglichkeit ein zusätzlicher Schmierstoff eingesetzt. Dieser Schmierstoff wird entweder automatisch über Schmierdüsen oder von Hand eingebracht. Um auch hier Arbeitsgänge zu sparen, ist vorgesehen, daß in dem Bereich des Verbindungssteges zwischen den überdeckenden Teilen zum Rand der tragenden Platte hin ein Schmierstoffpolster vorgesehen ist, wobei das Schmierstoffpolster während des Spritzprozesses in der Spritzform vorgesehen ist. Das Schmierstoffpolster ist also nach dem Spritzen bereits vorhanden und kann die Schmierfunktion nach dem Deformationsschlag übernehmen.

Nach einer weiteren Ausgestaltung der Erfindung ist vorgesehen, daß beim Spritzprozeß in der Spritzform Lagerbuchsen vorgesehen sind, die sich beim Spritzen mit den Verbindungsstegen verbinden und diese umschließen. Eine Variation dieser Ausführungsform kann derart gebildet sein, daß beim Spritzprozeß in der Spritzform

Lagerwerkstoff vorgesehen ist, der sich beim Spritzen mit den Verbindungsstegen verbindet und diese umschließt. In diesem Fall laufen die Lagerbuchsen mit den beweglichen Stegen in den Durchbruchsrändern der tragenden Platten.

Es ist aber auch eine andere Ausführungsform in Spritztechnik denkbar, indem eine Lagerbuchse oder ein Lagerwerkstoff beim Spritzprozeß in der Spritzform vorgesehen sind und in eine Hülse, die in den Durchbruch der tragenden Platte gespritzt wird, drehfest eingespritzt ist. In diesem Fall sitzt die Lagerbuchse drehfest im Durchbruch.

Die Erfindung wird anhand der Zeichnung näher erläutert. Es zeigen:
Fig. 1a bis 1c ein in Kunststoff-Spritztechnik in einem Spritzgang gebildetes mehrteiliges Getriebe, das als Zahnstangengetriebe wirkt,
Fig.2a bis 2d ein in Kunststoff-Spritztechnik in einem Spritzgang gebildetes Hebelgetriebe,
Fig. 3 ein Zahnradgetriebe, das in Metall-Kunststoff-Spritztechnik in Mehrschichtbauweise gebildet ist,
Fig. 4a und 4b eine in Spritztechnik gebildete Montagehilfe und eingespritzte Schmierung,
Fig. 5 eine eingespritzte Gleitlager-Schmierbuchse,
Fig. 6 eine eingespritzte Gleitlager-Schmierbuchse mit Luftlagerrillen,
Fig. 7 eine Radlagerung zwischen zwei tragenden Metallplatten.

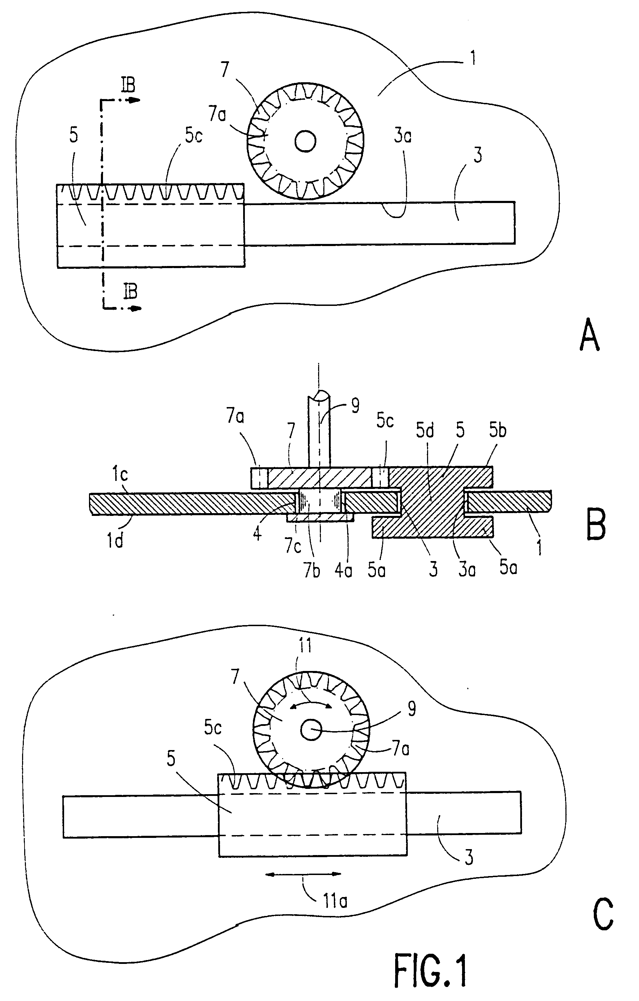

In Fig. 1a ist ein Ausschnitt aus einer tragenden Metallplatte 1 dargestellt, auf der in Kunststoff-Spritztechnik (Outsert-Moulding-Technik) Funktionsteile gebildet sind. In der tragenden Platte 1 ist ein Schlitz 3 vorgesehen, auf den in Kunststoff-Spritztechnik ein Schieber 5 gespritzt ist. Neben den Schieber 5 und neben den Schlitz 3 ist ein Zahnrad mit einer Zahnung 7a gespritzt, die mit einer Zahnung 5c des Schiebers 5 kämmen kann. Fig. 1b zeigt die Anordnung im Schnitt IB-IB nach Fig. 1a. Das Zahnrad 7 und der Schieber 5 kämmen nur scheinbar; sie liegen hintereinander voneinander getrennt. Der Schieber 5 übergreift mit Haltestücken 5a, 5b die Ränder 3a des Schlitzes 3. Ein breiter Steg 5d, der sich durch den Schlitz 3 erstreckt, verbindet die Haltestücke 5a, 5b an der Ober- und Unterseite des Schiebers 5. In entsprechender Konstruktion ist das Zahnrad 7 mit einem Steg 7b versehen, der durch einen runden Durchbruch 4 mit Durchbruchrändern 4a greift. Das Zahnrad 7 übergreift die Ränder 4a auf der Plattenoberseite 1c; der Steg 7b ist an der Plattenunterseite 1d mit einem Kragen 7c versehen, der Zusammen mit dem Zahnrad 7 und dem Steg 7b die Ränder 4a umgreift.

Im Zustand unmittelbar nach dem Spritzen sind die Funktionsteile 5, 7 schwer beweglich. Deshalb sind beide Funktionsteile 5, 7 in einem von beiden Plattenseiten her ausgeführten Deformationsschlag nach EP 392 600 A2 bewegungsfähig gemacht. Danach ist der Schieber nach rechts verschoben worden, so daß die Zahnungen 5c und 7a kämmen. Nun kann von dem Zahnrad 7, wenn es über seine Welle 9 in Richtung eines Doppelpfeiles 11 in Umlauf versetzt wird, der Schieber 5 in Richtung eines Doppelpfeiles 11a hin und her verfahren werden. In einem einmaligen Spritzvorgang und einem darauf folgenden Deformationsschlag ist damit ein funktionsfähiges Zahnstangengetriebe entstanden.

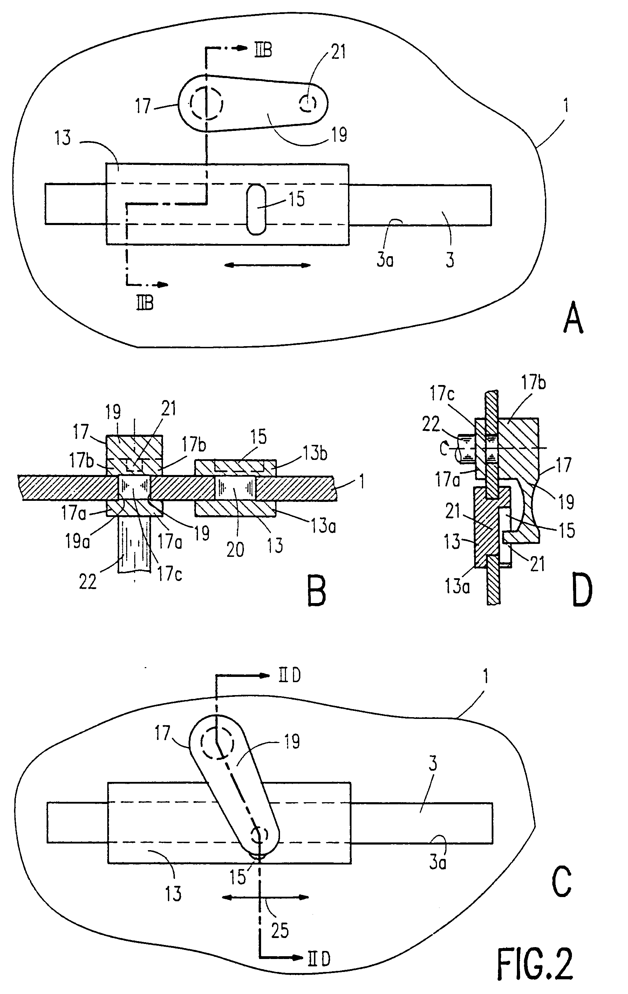

Fig. 2a bis 2d zeigen die Ausbildung eines Hebelgetriebe in Kunststoff-Spritztechnik, wobei zwei Teile des Hebelgetriebe in einem Spritzvorgang gebildet sind. Das Hebelgetriebe besteht aus einem Schieber 13, in dem ein Querschlitz 15 vorgesehen ist, und einem Hebel 17 mit einem Hebelarm 19. Der Hebelarm 19 ist mit einem Mitnehmerstift 21 versehen.

In Kunststoff-Spritztechnik (Outsert-Moulding) sind nebeneinander in einem Arbeitsgang auf der tragenden Platte 1 der Schieber 13 und der Hebel 17 gespritzt. In Fig. 2b ist anhand des Schnittes IIB-IIB in Fig. 2a zu erkennen, daß der Schieber 13 die Ränder 3a des Schlitzes 3 nach dem Spritzen mit Kunststoffhaltestücken 13a, 13b überdeckt. Ebenso überdecken Kunststoffhaltestücke 17a, 17b die Ränder 19a eines kreisförmigen Durchbruches 20, durch den ein Verbindungssteg 17c des Hebels 17 hindurch greift. Der Verbindungssteg verbindet die Haltestücke 17a und 17b und hält damit den Hebel an der tragenden Platte 1 fest. Gleichzeitig verbindet der Verbindungssteg 17c den Hebel 17 mit einer Welle 22. Weitere Einzelheiten zu dieser Technik sind in der EP-Patentanmeldung 392 600 A2 beschrieben.

Nachdem der Hebel 17 und der Schieber 13 mit Hilfe eines von beiden Plattenseiten 1a und 1c geführten Deformatinsschlages in dem Schlitz 3 bzw. dem Durchbruch 21 verschieblich bzw. drehbar gemacht worden sind, wird der Hebelarm 19 aus der Stellung nach Fig. 2a und 2b im Uhrzeigersinn verschwenkt, wobei der Hebelarm 19 mit dem Stift 21 hochgebogen wird. Das Verschwenken geht so weit, bis der Mitnahmestift 21 in den Schlitz 15 des Schiebers 3 fällt. Danach ist das Hebelgetrieb, nachdem es ursprünglich in einem Arbeitsgang auf der tragenden Platte gespritzt wurde, funktionsfähig, und der Hebelarm 21 kann den Schieber 13 in Richtung eines Doppelpfeiles 25 hin und her bewegen (Draufsicht in Fig. 2c und Schnitt in Fig. 2d).

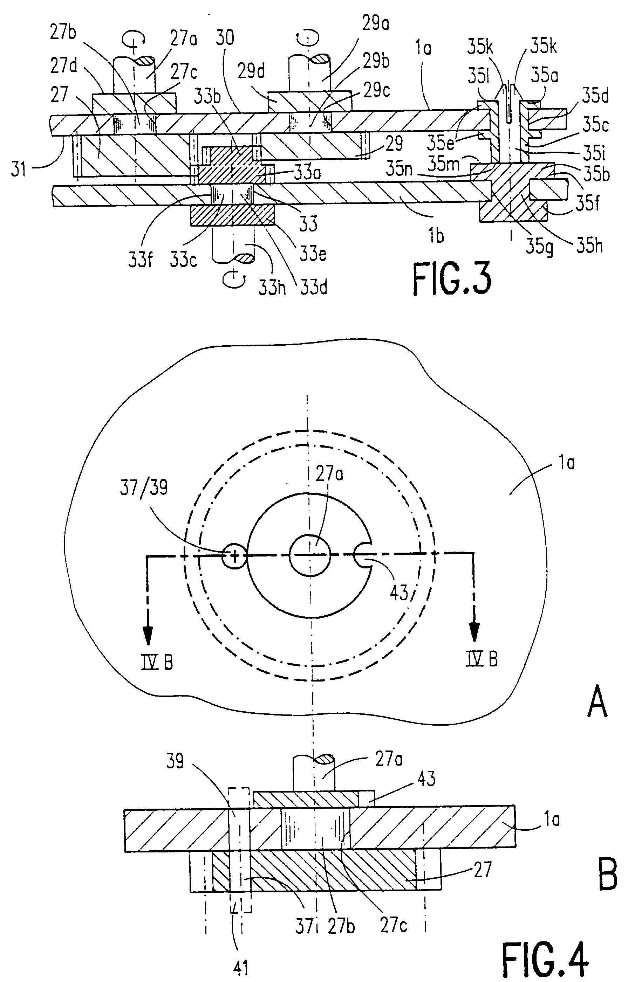

Fig. 3 zeigt eine dritte Ausführungsform des technischen Gerätes, die beispielsweise für ein Uhrwerk geeignet ist, welches außerordentlich leise laufen kann. Es sind zwei tragende Platten 1a und 1b vorgesehen, die unabhängig voneinander hergestellt werden. An die Platte 1a werden mit Wellen 27a und 29a versehene Zahnräder 27, 29 angespritzt, wobei die Wellen 27a und 29a in Stegform von der Oberseite 30 der Platte 1a als Stege 27b, 29b zur anderen Plattenseite 31 hin durch kreisförmige Durchbrüche 27c und 29c hindurchgreifen. Haltekragen 27d und 29d umschließen dabei zusammen mit den Zahnrädern 27, 29 die Ränder der Durchbrüche.

Die zweite tragende Platte 1b trägt ein Doppelzahnrad 33 mit einem großen Zahnkranz 33a und einem kleinen Zahnkranz 33b. Durch die tragende Platte 1b mit ihrem Durchbruch 33c führt ein Steg 33d, der einstückig mit einem Kragen 33e verbunden ist. Dieser Kragen 33e und das größere Zwischenzahnrad 33a umschließen die Ränder 33f des Durchbruches 33c.

Nachdem die tragenden Platten 1a und 1b geetrennt voneinander gespritzt wurden und die Funktionsteile von beiden Plattenseiten ihren Deformationsschlag erhalten haben, werden die Platten 1a, 1b in Sandwich-Bauweise parallel aufeinander gesetzt, wobei die Zahnräder ineinander greifen. Auf diese Weise ist ein Getriebe entstanden, beispielsweise mit einer Antriebswelle 27a und einer Abtriebswelle 29a. Auch das Zwischenzahnrad 33 kann mit einer An- oder Abtriebswelle 33h verbunden sind, die in Fig. 3 gestrichelt angedeutet ist.

Ein solches Getriebe kann flach sein und außerordentlich leise laufen. Es ist leicht montierbar und als Uhrwerk- und Schaltwerkgetriebe oder auch allgemein als Übersetzungsgetriebe zu verwenden.

Um einen genau definierten Abstand der tragenden Platten 1a und 1b zu erhalten, sind Abstandsglieder 35a, 35b vorgesehen, die miteinander zusammenwirken. Das Abstandsglied 35a besteht beispielsweise aus einer Hülse 35c, die durch einen Durchbruch 35d der tragenden Platte 1a hindurch greift und mit Kragen 35e die Durchbruchsränder umgibt. Diese Hülse bleibt auf der Platte 1a drehfest. Das andere Abstandsglied 35b umfaßt mit Kragen 35f die Ränder eines Durchbruches 35g, wobei die Kragen 35f durch die Platte hindurch mittels eines Steges 35h verbunden sind. Das Abstandsglied 35b trägt einen Sicherungsstift 35i, der durch die Hülse 35c durchgreifen kann. Sicherungshaken 35k an dem freien Stiftende können auf eine Sicherungsfläche 35l des Kragens 35e greifen. Bei einer genau definierten Höhenvorgabe einer Absatzfläche 35m des Abstandsgliedes 35b und einer Endfläche 35n der Hülse 35c wird ein genauer Abstand zwischen den Platten 1a und 1b vorgegeben, wenn diese aufeinander gesetzt werden. Die Abstandsglieder halten die Platten nach dem Zusammensetzen auf dem vorgegebenen Abstand fest. Die Montage ist einfach und sicher.

Fig. 4a und 4b zeigen, wie die Montage eines Getriebes nach Fig. 3 erleichtert werden kann. Beispielsweise beim Spritzen des Zahnrades 27 mit seinen übrigen Teilen wird in dem Zahnrad ein parallel zur Achsrichtung des Zahnrades verlaufendes Loch 37 vorgehalten, das mit einem Durchbruch 39 in der Platte 1a fluchtet. Wird bei der späteren Montage der drehfähig gemachten Zahnräder in allen Zahnrädern bzw. allen drehbaren Teilen eine derartige fluchtende Lochkonstruktion 37/39 vorgehalten und werden in die Löcher während der Montage Arretierstifte 41 eingesteckt, wie einer in Fig. 4b gestrichelt angedeutet ist, dann können bei korrekter Lage der Durchbrüche 37, 39 die Zahnräder genau passend ineinander geschoben werden, wenn die Platten 1a und 1b nach Fig. 3 gegeneinander geschoben werden. Eine solche Montagehilfe gestattet das fehlerfreie Montieren eines Getriebes nach Fig. 3.

Um die Gleitfähigkeit der Lagerungen des Getriebes nach Fig. 3 zu verbessern, ohne später zusätzliche Schmiergänge vornehmen zu müssen, ist vorgesehen, daß in dem Bereich des Verbindungssteges 27b im Kragen 27d ein Schmierstoffpolster 43 vorgesehen ist. Dieses Schmierstoffpolster kann beim Deformationsschlag platzen und den Schmierstoff damit in die Lagerflächen einfließen lassen.

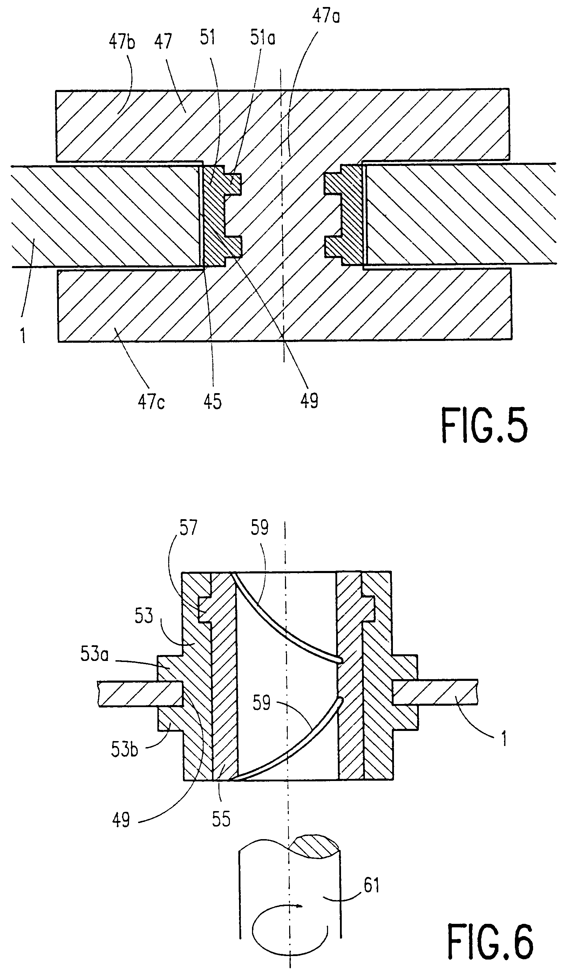

Die Verbesserung der Gleitfähigkeit läßt sich auch durch das Einspritzen von gleitfähigen Teilen erreichen. Diese gleitfähigen Teile können dabei entweder mit dem jeweiligen Steg des Funktionsteiles oder dem Durchbruchsrand der tragenden Platte verbunden werden. Fig. 5 zeigt ein Ausführungsbeispiel, wobei der gleitfähige Werkstoff durch das Einbringen von Lagerbuchsen oder Lagerwerkstoff in die Spritzform vorgenommen werden kann. Das Ausführungsbeispiel gilt ganz allgemein für die Lagerungstechnik in Outsert-Moulding. Die tragende Platte 1 hat einen kreisförmigen Durchbruch 45, durch den sich der Steg 47a eines Funktionsteiles 47 hindurch erstreckt. Haltestücke 47b und 47c übergreifen die Ränder des Durchbruches 45. Vor dem Umspritzen der tragenden Platte 1 wurden in das Spritzwerkzeug in Nachbarschaft der Ränder 49 des Durchbruches 45 entweder eine Lagerbuchse oder ein Lagerwerkstoff 51 eingesetzt. Die Buchse kann beispielsweise innenliegende Nuten 51a aufweisen. Beim Spritzen verbindet sich das Material des Steges 47a mit dem Lagerwerkstoff 51. Auf diese Weise ist ein verbessertes Lager entstanden, das nach dem Aufbringen des Deformationsschlages leichtgängig gemacht ist.

Fig. 6 zeigt ein Ausführungsbeispiel, bei dem die tragende Platte 1 mit einer Hülse 53 versehen wird, die die Durchbruchsränder 49 mit Kragen 53a, 53b umschließt. In die Hülse 53 ist eine Lagerbuchse 55 eingespritzt. Äußere Ansätze 57 der Lagerbuchse können dabei in die Hülse 53 eingreifen und sich in dieser festsetzen. Wenn die Lagerbuchse 55 auf der Innenseite mit gegenläufigen Schmiernuten 59 versehen ist, dann können diese einer in die Lagerbuchse 55 eingeführten Welle 61 entweder als Schmierstoff oder als Luftlager dienen, wenn die Nuten 59 wie Nuten eines Luftlagers spiralförmig ausgeführt sind.

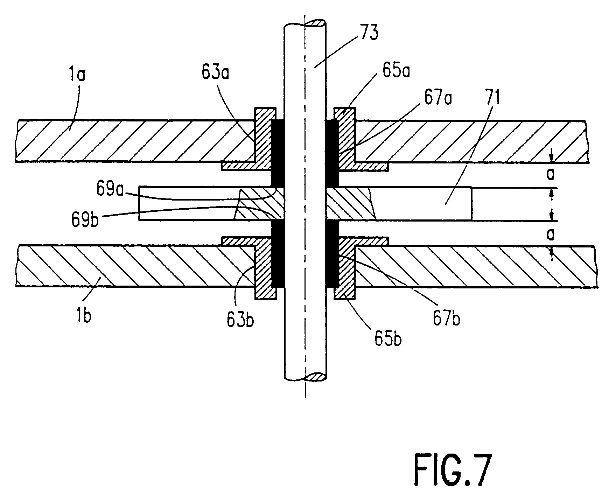

Fig. 7 zeigt zwei tragende Platten 1a und 1b, die wie bei Fig. 3 mittels Abstandsgliedern 35a, 35b verbunden sein können. In Durchbrüche 63a, 63b der Platten 1a, 1b sind Lagerhülsen 65a, 65b vorgesehen. In diesen Lagerhülsen 65a, 65b sind eingespritzt oder nachträglich eingeschlagen Laufbuchsen 67a, 67b vorgesehen. Die aufeinander zu weisenden Endflächen 69a, 69b der Laufbuchsen 67a, 67b haben einen genau definierten Abstand von der jeweiligen Platte 1a, 1b. Werden die Platten 1a, 1b nun aufeinander gesetzt, nachdem ein Getrieberad 71 mit einer Welle 73 in eine der Laufbuchsen 67a oder 67b eingesetzt wurde, dann richten die Endflächen 69a, 69b das Getrieberad 71 in genauem Abstand aus gegenüber irgendeinem weiteren Antriebsrad, das nicht dargestellt ist.

## Patentansprüche

1. Technisches Gerät, insbesondere elektromechanisches Laufwerk zum Bewegen von Informationsträgern, wie Magnetbändern oder Platten, mit einer tragenden Platte (1) aus Metall, an der in Kunststoff-Spritztechnik bewegliche Kunststoff-Funktionsteile (5, 7, 13, 17, 27, 29, 33, 47) gebildet sind, von denen sich jedes im Bereich wenigstens eines Plattendurchbruches (3, 4, 27c, 29c, 33c, 45) festhält mittels Kunststoff-Haltestücken (5a, 5b, 7, 7c, 13a, 13b, 27, 27d, 29, 29d, 33a, 33e, 47b, 47c) auf beiden Plattenoberflächen (1c, 1d), die durch den Durchbruch hindurch mittels eines einstückig mit ihnen gebildeten Kunststoffsteges (5d, 7b, 21, 27b, 29b, 33d, 47a) verbunden sind, wobei die die Durchbruchsränder (3a, 4a, 19a, 27c, 29c, 33f) überdeckenden Teile der Kunststoff-Haltestücke die überdeckten Plattenteile mit einem nachträglich durch mechanisches Verformen der Funktionsteile erhaltenen Spiel einschließen, das der Beweglichkeit eines Gleitlagers entspricht, dadurch gekennzeichnet, daß mehrere an einer Platte (1) getrennt gebildete und nach dem Bilden beweglich gemachte Funktionsteile (5, 7, 13, 17,27, 29, 33) nach einem In-Eingriff-Bringen miteinander mehrteilige bewegliche Antriebe bilden, wobei ein Funktionsteil ein als Zahnstange ausgebildeter Schieber (5) und das andere Funktionsteil ein Zahnrad (7) ist, die ein Zahnstangengetriebe bilden, indem der seitlich neben dem Zahnrad (7) gebildete Schieber (6) in den Wirkbereich des Zahnrades (7) geschoben ist.

2. Technisches Gerät, insbesondere elektromechanisches Laufwerk zum Bewegen von Informationsträgern, wie Magnetbändern oder Platten, mit einer tragenden Platte (1) aus Metall, an der in Kunststoff-Spritztechnik bewegliche Kunststoff-Funktionsteile (5, 7, 13, 17, 27, 29, 33, 47) gebildet sind, von denen sich jedes im Bereich wenigstens eines Plattendurchbruches (3, 4, 27c, 29c, 33c, 45) festhält mittels Kunststoff-Haltestücken (5a, 5b, 7, 7c, 13a, 13b, 27, 27d, 29, 29d, 33a, 33e, 47b, 47c) auf beiden Plattenoberflächen (1c, 1d), die durch den Durchbruch hindurch mittels eines einstückig mit ihnen gebildeten Kunststoffsteges (5d, 7b, 21, 27b, 29b, 33d, 47a) verbunden sind, wobei die die Durchbruchsränder (3a, 4a, 19a, 27c, 29c, 33f) überdeckenden Teile der Kunststoff-Haltestücke die überdeckten Plattenteile mit einem nachträglich durch mechanisches Verformen der Funktionsteile erhaltenen Spiel einschließen, das der Beweglichkeit eines Gleitlagers entspricht, dadurch gekennzeichnet, daß mehrere an einer Platte (1) getrennt gebildete und nach dem Bilden beweglich gemachte Funktionsteile (5, 7, 13, 17,27, 29, 33) nach einem In-Eingriff-Bringen miteinander mehrteilige bewegliche Antriebe bilden, wobei ein als Schieber (13) und ein als Hebel (17) mit einem Hebelarm (19) ausgebildetes Funktionsteil ein Hebelgetriebe bilden, indem ein Mitnahmestift (21) des Hebelarmes (19) in eine Mitnahmeöffnung (15) des Schiebers (13) nachträglich eingeklinkt ist.

3. Technisches Gerät, insbesondere elektromechanisches Laufwerk zum Bewegen von Informationsträgern, wie Magnetbändern oder Platten, mit einer tragenden Platte (1) aus Metall, an der in Kunststoff-Spritztechnik bewegliche Kunststoff-Funktionsteile (5, 7, 13, 17, 27, 29, 33, 47) gebildet sind, von denen sich jedes im Bereich wenigstens eines Plattendurchbruches (3, 4, 27c, 29c, 33c, 45) festhält mittels Kunststoff-Haltestücken (5a, 5b, 7, 7c, 13a, 13b, 27, 27d, 29, 29d, 33a, 33e, 47b, 47c) auf beiden Plattenoberflächen (1c, 1d), die durch den Durchbruch hindurch mittels eines einstückig mit ihnen gebildeten Kunststoffsteges (5d, 7b, 21, 27b, 29b, 33d, 47a) verbunden sind, wobei die die Durchbruchsränder (3a, 4a, 19a, 27c, 29c, 33f) überdeckenden Teile der Kunststoff-Haltestücke die überdeckten Plattenteile mit einem nachträglich durch mechanisches Verformen der Funktionsteile erhaltenen Spiel einschließen, das der Beweglichkeit eines Gleitlagers entspricht, dadurch gekennzeichnet, daß mehrere an einer Platte (1) getrennt gebildete und nach dem Bilden beweglich gemachte Funktionsteile (5, 7, 13, 17,27, 29, 33) nach einem In-Eingriff-Bringen miteinander mehrteilige bewegliche Antriebe bilden, wobei wenigstens zwei Funktionsteile (27, 29, 33) wenigstens teilweise zur Übertragung von Bewegungen durch die tragende Platte ausgelegt sind und daß die Funktionsteile (27, 29, 33) von wenigstens zwei in Schichtbauweise auf Abstand übereinander angeordneten, Funktionsteile tragenden Platten (1a, 1b) zwischen den tragenden Platten mit den Funktionsteilen (27, 29, 33) der jeweils anderen Platte (1b, 1a) in kraftübertragender Beziehung sind.

4. Technisches Gerät nach Anspruch 3, dadurch gekennzeichnet, daß zur Abstandsgebung zwischen den tragenden Platten (1a, 1b) Abstandsglieder (35a, 35b) vorgesehen sind, wobei die Abstandsglieder (35a, 35b) jeweils an eine tragende Platte (1a, 1b) im festen Sitz angespritzt sind und Befestigungsmittel (35c bis 35n) tragen, die in die andere Platte (1b, 1a) einschnappbar ausgebildet sind.

5. Technisches Gerät nach Anspruch 4, dadurch gekennzeichnet, daß die Befestigungsmittel in eine Hülse (35c) der anderen tragenden Platte einschnappbar sind, wobei die Hülse (35c) im festen Sitz an die andere tragende Platte angespritzt ist.

6. Technisches Gerät nach einem der Ansprüche 3 bis 5, dadurch gekennzeichnet, daß wenigstens die Funktionsteile (27, 29, 33) zwischen den tragenden Platten (1a, 1c) als Zahnräder ausgebildet sind, die ein Getriebe bilden und von außen übertragene Antriebsdrehbewegungen umformen und als Antriebsdrehbewegungen wieder nach außen abgeben.

7. Technisches Gerät nach einem der Ansprüche 3 bis 6, dadurch gekennzeichnet, daß in einem der überdeckenden Teile beim Spritzvorgang ein Loch (37) gebildet wird, das mit einem Loch (39) in der tragenden Platte fluchtet, und daß bei mehreren in Getriebeeingriff zu bringenden Funktionsteilen (27, 29, 33) die fluchtenden Löcher (37, 39) in den überdeckenden Teilen und in der tragenden Platte so vorgesehen sind, daß die Zahnungen beim Zusammenfügen der tragenden Platten (1a, 1b) bei fluchtenden Löchern (37/39) sauber ineinander greifen.

8. Technisches Gerät nach einem der Ansprüche 1 bis 7, dadurch gekennzeichnet, daß in dem Bereich des Verbindungssteges zwischen den überdeckenden Teilen zum Durchbruchsrand der tragenden Platte hin ein Schmierstoffpolster (43) vorgesehen ist.

9. Technisches Gerät nach Anspruch 8, dadurch gekennzeichnet, daß das Schmierstoffpolster während des Spritzprozesses in der Spritzform vorgesehen ist.

10. Technisches Gerät nach einem der Ansprüche 1 bis 9, dadurch gekennzeichnet, daß beim Spritzprozeß in der Spritzform Lagerbuchsen (51) vorgesehen sind, die sich beim Spritzen mit den Verbindungsstegen (47a) verbinden und diese umschließen.

11. Technisches Gerät nach einem der Ansprüche 1 bis 9, dadurch gekennzeichnet, daR beim Spritzprozeß in der Spritzform Lagerwerkstoff vorgesehen ist, der sich beim Spritzen mit den Verbindungsstegen verbindet und diese umschließt.

12. Technisches Gerät nach einem der Ansprüche 1 bis 9, dadurch gekennzeichnet, daß eine Lagerbuchse (55) oder ein Lagerwerkstoff beim Spritzprozeß in der Spritzform vorgesehen sind und in eine Hülse (53), die in den Durchbruch der tragenden Platte (1) gespritzt wird, drehfest eingespritzt ist.

## Claims

1. A technical device, in particular an electromechanical running gear for the movement of information carriers, such as magnetic tapes or discs, comprising a carrier plate (1) made of metal at which movable functional parts (5, 7, 13, 17, 27, 29, 33, 47) made of synthetic resin are formed by an injection moulding process, each of which parts being held in the region of at least one hole (3, 4, 27c, 29c, 33c, 45) in the plate by means of retaining pieces (5a, 5b, 7, 7c, 13a, 13b, 27, 27d, 29, 29d, 33a, 33e, 47b, 47c) made of synthetic resin on both plate surfaces (1c, 1d), these retaining pieces being interconnected through the hole by means of a synthetic-resin connection bridge (5d, 7b, 21, 27b, 29b, 33d, 47a) integral with these pieces, while the portions of the retaining pieces of synthetic resin covering the hole edges (3a, 4a, 19a, 27c, 29c, 33f) enclose the covered plate portions with a clearance which is obtained through subsequent mechanical deformation of the functional parts, which clearance corresponds to the movability of a plain bearing, characterized in that several functional parts (5, 7, 13, 17, 27, 29, 33) formed separately at a plate (1) and rendered movable after being formed constitute multiple movable drive units after being brought into mutual engagement, while one functional part is a slide (5) constructed as a rack and the other functional part is a pinion (7), together forming a rack and pinion system when the slide (6) formed laterally of the pinion (7) is shifted into the operational range of the pinion (7).

2. A technical device, in particular an electromechanical turning gear for the movement of information carriers, such as magnetic tapes or discs, comprising a carrier plate (1) made of metal at which movable functional parts (5, 7, 13, 17, 27, 29, 33, 47) made of synthetic resin are formed by an injection moulding process, each of which parts being held in the region of at least one hole (3, 4, 27c, 29c, 33c, 45) in the plate by means of retaining pieces (5a, 5b, 7, 7c, 13a, 13b, 27, 27d, 29, 29d, 33a, 33e, 47b, 47c) made of synthetic resin on both plate surfaces (1c, 1d), these retaining pieces being interconnected through the hole by means of a synthetic-resin connection bridge (5d, 7b, 21, 27b, 29b, 33d, 47a) integral with these pieces, while the portions of the retaining pieces of synthetic resin covering the hole edges (3a, 4a, 19a, 27c, 29c, 33f) enclose the covered plate portions with a clearance which is obtained through subsequent mechanical deformation of the functional parts, which clearance corresponds to the movability of a plain bearing, characterized in that several functional parts (5, 7, 13, 17, 27, 29, 33) formed separately at a plate (1) and rendered movable after being formed constitute multiple movable drive units after being brought into mutual engagement, while a functional part constructed as a slide (13) and a functional part constructed as a lever (17) with a lever arm (19) form a lever linkage in that a carrier pin (21) of the lever arm (19) is subsequently snapped into a carrier slot (15) of the slide (13).

3. A technical device, in particular an electromechanical running gear for the movement of information carriers, such as magnetic tapes or discs, comprising a carrier plate (1) made of metal at which movable functional parts (5, 7, 13, 17, 27, 29, 33, 47) made of synthetic resin are formed by an injection moulding process, each of which parts being held in the region of at least one hole (3, 4, 27c, 29c, 33c, 45) in the plate by means of retaining pieces (5a, 5b, 7, 7c, 13a, 13b, 27, 27d, 29, 29d, 33a, 33e, 47b, 47c) made of synthetic resin on both plate surfaces (1c, 1d), these retaining pieces being interconnected through the hole by means of a synthetic-resin connection bridge (5d, 7b, 21, 27b, 29b, 33d, 47a) integral with these pieces, while the portions of the retaining pieces of synthetic resin covering the hole edges (3a, 4a, 19a, 27c, 29c, 33f) enclose the covered plate portions with a clearance which is obtained through subsequent mechanical deformation of the functional parts, which clearance corresponds to the movability of a plain bearing, characterized in that several functional parts (5, 7, 13, 17, 27, 29, 33) formed separately at a plate (1) and rendered movable after being formed constitute multiple movable drive units after being brought into mutual engagement, while at least two functional parts (27, 29, 33) are designed at least partly for transmitting movements through the carrier plate, and in that the functional parts (27, 29, 33) of each of at least two plates (1a, 1b) arranged at a distance one above the other in a layered structure and carrying functional parts are in force-transmitting engagement with the functional parts (27, 29, 33) of the respective other carrier plate (1b, 1a) between said carrier plates.

4. A technical device as claimed in Claim 3, characterized in that spacer members (35a, 35b) are provided for keeping a distance between the carrier plates (1a, 1b), which spacer members (35a, 35b) are each injection moulded to a carrier plate (1a, 1b) so as to be immovable and carry fastening means (35c to 35n) which are so constructed that they can be snapped into the respective other plate (1b, 1a).

5. A technical device as claimed in Claim 4, characterized in that the fastening means are capable of snapping into a sleeve (35c) of the other carrier plate, which sleeve (35c) is injection moulded to the other carrier plate so as to be immovable.

6. A technical device as claimed in any one of the Claims 3 to 5, characterized in that at least those functional parts (27, 29, 33) which are situated between the carrier plates (1a, 1c) are constructed as gears, forming a gear transmission which converts rotational drive movements transmitted from the exterior and transmits them to the exterior again as rotational drive movements.

7. A technical device as claimed in any one of the Claims 3 to 6, characterized in that a hole (37) is formed in one of the covering portions during injection moulding, which hole is in alignment with a hole (39) in the carrier plate, and in that in the case of several functional parts (27, 29, 33) to be brought into mutual engagement the aligned holes (37, 39) in the covering portions and in the carrier plate are provided such that the teeth neatly mesh when the carrier plates (1a, 1b) with aligned holes (37, 39) are joined together.

8. A technical device as claimed in any one of the Claims 1 to 7, characterized in that a lubricant lining (43) is provided in the region of the connection bridge between the covering portions towards the edge of the carrier plate.

9. A technical device as claimed in Claim 8, characterized in that the lubricant lining is provided in the mould during the injection-moulding process.

10. A technical device as claimed in any one of the Claims 1 to 9, characterized in that bearing bushes (51) are provided in the mould during the injection moulding process, which bushes are joined to the connection bridges (47a) during injection moulding so as to enclose the latter.

11. A technical device as claimed in any one of the Claims 1 to 9, characterized in that bearing material is provided in the mould during the injection moulding process, which material is joined to the connection bridges during injection moulding so as to enclose the latter.

12. A technical device as claimed in any one of the Claims 1 to 9, characterized in that a bearing bush (55) or a bearing material is provided in the mould during the injection moulding process and is injected into a sleeve (53) so as to be immovable therein, the sleeve being injected into the hole of the carrier plate (1).

## Revendications

1. Appareil technique, en particulier un roulement électromécanique pour le déplacement de supports d'information, comme des bandes magnétiques ou des disques, avec une plaque de support (1) en métal sur laquelle sont appliquées des pièces fonctionnelles (5, 7, 13, 17, 27, 29, 33, 37) en plastique mobiles selon une technique de moulage par injection de plastique, dont chacune est bloquée dans la région d'au moins une ouverture de plaque (3, 4, 27c, 29c, 33c, 45) à l'aide de pièces de fixation (5a, 5b, 7, 7c, 13a, 13b, 27, 27d, 29, 29d, 33a, 33e, 47b, 47c) en plastique sur les deux surfaces de la plaque (1c, 1d) qui sont reliées à travers l'ouverture à l'aide d'une barrette en plastique (5d, 7b, 21, 27b, 29b, 33d, 47a) formée avec elles en une seule pièce, les parties des pièces de fixation en plastique recouvrant les bords de l'ouverture (3a, 4a, 19a, 27c, 29c, 33f) renfermant les parties recouvertes de la plaque avec un jeu qui est obtenu ultérieurement par déformation mécanique des pièces fonctionnelles et correspond à la mobilité d'un palier à glissement, caractérisé en ce que plusieurs pièces fonctionnelles (5, 7, 13, 17, 27, 29, 33) formées séparément sur une plaque (1) et rendues mobiles après leur formation forment, après l'engrènement, des entraînements mobiles en plusieurs pièces, une pièce fonctionnelle formant un tiroir (5) conçu comme une crémaillère et l'autre pièce fonctionnelle une roue d'engrenage (7), toutes deux formant une transmission à crémaillère, le tiroir (6) formé latéralement à côté de la roue d'engrenage (7) étant poussé dans le rayon d'action de la roue d'engrenage (7).

2. Appareil technique, en particulier un roulement électromécanique pour le déplacement de supports d'information, comme des bandes magnétiques ou des disques, avec une plaque de support (1) en métal sur laquelle sont appliquées des pièces fonctionnelles (5, 7, 13, 17, 27, 29, 33, 37) en plastique mobiles selon une technique de moulage par injection de plastique, dont chacune est bloquée dans la région d'au moins une ouverture de plaque (3, 4, 27c, 29c, 33c, 45) à l'aide de pièces de fixation (5a, 5b, 7, 7c, 13a, 13b, 27, 27d, 29, 29d, 33a, 33e, 47b, 47c) en plastique sur les deux surfaces de la plaque (1c, 1d) qui sont reliées à travers l'ouverture à l'aide d'une barrette en plastique (5d, 7b, 21, 27b, 29b, 33d, 47a) formée avec elles en une seule pièce, les parties des pièces de fixation en plastique recouvrant les bords de l'ouverture (3a, 4a, 19a, 27c, 29c, 33f) renfermant les parties recouvertes de la plaque avec un jeu qui est obtenu ultérieurement par déformation mécanique des pièces fonctionnelles et correspond à la mobilité d'un palier à glissement, caractérisé en ce que plusieurs pièces fonctionnelles (5, 7, 13, 17, 27, 29, 33) formées séparément sur une plaque (1) et rendues mobiles après la formation forment, après l'engrènement, des entraînements mobiles en plusieurs pièces, une pièce fonctionnelle conçue comme un tiroir (13) et une pièce fonctionnelle conçue comme un levier (17) avec un bras de levier (19) formant toutes deux une transmission à levier, une broche d'entraînement (21) du bras de levier (19) étant enclenchée dans une ouverture d'entraînement (15) du tiroir (13).

3. Appareil technique, en particulier un roulement électromécanique pour le déplacement de supports d'information, comme des bandes magnétiques ou des disques, avec une plaque de support (1) en métal sur laquelle sont appliquées des pièces fonctionnelles (5, 7, 13, 17, 27, 29, 33, 47) en plastique mobiles selon une technique de moulage par injection de plastique, dont chacune est bloquée dans la région d'au moins une ouverture de plaque (3, 4, 27c, 29c, 33c, 45) à l'aide de pièces de fixation (5a, 5b, 7, 7c, 13a, 13b, 27, 27d, 29, 29d, 33a, 33e, 47b, 47c) en plastique sur les deux surfaces de la plaque (1c, 1d) qui sont reliées à travers l'ouverture à l'aide d'une barrette en plastique (5d, 7b, 21, 27b, 29b, 33d, 47a) formée avec elles en une seule pièce, les parties des pièces de fixation en plastique recouvrant les bords de l'ouverture (3a, 4a, 19a, 27c, 29c, 33f) renfermant les parties recouvertes de la plaque avec un jeu qui est obtenu ultérieurement par déformation mécanique des pièces fonctionnelles et correspond à la mobilité d'un palier à glissement, caractérisé en ce que plusieurs pièces fonctionnelles (5, 7, 13, 17, 27, 29, 33) formées séparément sur une plaque (1) et rendues mobiles après la formation forment, après l'engrènement, des entraînements mobiles en plusieurs pièces, au moins deux pièces fonctionnelles (27, 29, 33) étant conçues, du moins en partie, pour la transmission d'un mouvement par la plaque de support et en ce que les pièces fonctionnelles (27, 29, 33) sont en relation de transmission avec les pièces fonctionnelles (27, 29, 33) de l'autre plaque respective (1b, 1a) par au moins deux plaques (1a, 1b) entre les plaques de support portant des pièces fonctionnelles et espacées l'une de l'autre en couches.

4. Appareil technique selon la revendication 3, caractérisé en ce que, pour l'écartement entre les plaques de support (1a, 1b), sont prévus des éléments d'écartement (35a, 35b), les éléments d'écartement (35a 35b) étant fixés par moulage par injection respectivement à une plaque de support (1a, 1b) et portant des moyens de fixation (35c à 35n), qui sont conçus de manière encliquetable dans l'autre plaque (1b, 1a).

5. Appareil technique selon la revendication 4, caractérisé en ce que les moyens de fixation peuvent s'encliqueter dans une douille (35c) de l'autre plaque de support, la douille (35c) étant fixée par moulage par injection sur l'autre plaque de support.

6. Appareil technique selon l'une des revendications 3 à 5, caractérisé en ce qu'au moins une des pièces fonctionnelles (27, 29, 33) est conçue entre les plaques de support (1a, 1c) comme des roues d'engrenage qui forment une transmission et déforment des mouvement rotatifs d'entraînement transmis de l'extérieur et les restituent vers l'extérieur.

7. Appareil technique selon l'une des revendications 3 à 6, caractérisé en que dans une des parties de recouvrement, il est formé, lors de la procédure d'injection, un trou (37) qui est aligné à un trou (39) dans la plaque de support et en ce qu'avec plusieurs pièces fonctionnelles à mettre en prise (27, 29, 33), les trous alignés (37, 39) sont prévus dans les parties de recouvrement et dans la plaque de support, de telle sorte que les dentures sont en prise précisément lors de l'assemblage des plaques de support (1a, 1b) en cas de trous alignés (37/39).

8. Appareil technique selon l'une des revendications 1 à 7, caractérisé en ce que, dans la région de la barrette de liaison entre les parties de recouvrement vers le bord de l'ouverture de la plaque de support est prévu un coussin de lubrifiant (43).

9. Appareil technique selon la revendication 8, caractérisé en ce que le coussin de lubrifiant est prévu dans le moule à injection pendant le processus d'injection.

10. Appareil technique selon l'une des revendications 1 à 9, caractérisé en ce que, lors du processus d'injection dans le moule à injection, sont prévus des paliers (51) qui sont reliés lors du moulage par injection aux barrettes de liaison (47a) et les entourent.

11. Appareil technique selon l'une des revendications 1 à 9, caractérisé en ce que, lors du processus de moulage par injection, il est prévu un matériau antifriction dans le moule à injection qui est relié aux barrettes de liaison lors du moulage par injection et les entoure.

12. Appareil technique selon l'une des revendications 1 à 9, caractérisé en qu'un palier (55) ou un matériau antifriction est prévu dans le moule à injection lors du processus de moulage par injection et est injecté sans rotation dans une douille (53) qui est moulée par injection dans l'ouverture de la plaque de support (1).
